# EUROPÄISCHE PATENTANMELDUNG

(11) **EP 2 543 612 A1**
(43) Veröffentlichungstag der Anmeldung: **09.01.2013**
(21) Anmeldenummer: 12004976.2
(22) Anmeldetag: 05.07.2012
(51) Int. Cl.: B65G 15/12, B65B 7/16, B65B 35/24, B65B 43/52

(54) **Schalenverschließmaschine**

(30) Priorität: 07.07.2011 DE 102011106826
(71) Anmelder: MULTIVAC Sepp Haggenmüller GmbH & Co KG, 87787 Wolfertschwenden (DE)
(72) Erfinder: Negele, Wolfgang, 87724 Ottobeuren (DE)
(74) Vertreter: Grünecker, Kinkeldey, Stockmair & Schwanhäusser

(57) **Zusammenfassung**

Die Erfindung bezieht sich auf eine Schalenverschließmaschine (1) umfassend Transportbänder (13, 13b), die eine Verstellung quer zu einer Transportrichtung (R) aufweisen.

## Beschreibung

Die Erfindung bezieht sich auf eine Schalenverschließmaschine gemäß dem Oberbegriff des Anspruchs 1.

Schalenverschließmaschinen, wie sie auch von der Anmelderin angeboten werden, sind in der DE 10 2008 030 510 A1 offenbart. Um eine hohe Leistung zu erhalten, können vom Bediener an der Maschinensteuerung Bandgeschwindigkeiten und Bandbeschleunigungen verändert werden. Für hohe Bandgeschwindigkeiten und Bandbeschleunigungen spielt die Haftung des Schalenbodens der mit Produkt gefüllten Schale auf der Bandoberfläche der Transportbänder eine entscheidende Rolle. Die Haftung kann sich auch während des Produktionsprozesses durch zunehmende Luftfeuchtigkeit oder flüssige Produktreste verändern und es kommt zu Fehlpositionierungen auf dem Sammelband. Ein Greifersystem ist dann eventuell nicht mehr in der Lage die Schalen zu erfassen und die Schalenverschließmaschine hält an, damit der Fehler behoben werden kann. Diese Stillstandszeiten mindern die Leistung der Schalenverschließmaschine.

Aufgabe der vorliegenden Erfindung ist es, dieses Problem mit konstruktiv möglichst einfachen Mitteln zu beheben.

Diese Aufgabe wird gelöst durch eine Schalenverschließmaschine mit den Merkmalen des Anspruchs 1. Vorteilhafte Weiterbildungen der Erfindung sind in den Unteransprüchen angegeben.

Die erfindungsgemäße Schalenverschließmaschine umfasst eine Transporteinrichtung, die einen Zuführförderer und/oder einen dem Zuführförderer in Transportrichtung nachgeordneten Sammelförderer aufweist, um Schalen zu einer Arbeitsstation, vorzugsweise einer Siegelstation, der Schalenverschließmaschine zu transportieren. Die Schalenverschließmaschine zeichnet sich dadurch aus, dass der Zuführförderer und/oder der Sammelförderer jeweils wenigstens zwei Transportbänder aufweisen, von denen wenigstens zwei quer zu einer Transportrichtung verstellbar sind. Die Transportbänder können dabei eine gemeinsame Breite aufweisen, die um mehr als die Hälfte geringer ist als die Breite eines einzigen bisher dafür verwendeten Transportbandes. Durch die geringere Auflagefläche von schmalen Transportbändern bleiben weniger Produktreste, beispielsweise aus den Schalen herausschwappende Salzlake oder Soßen, auf den Transportbändern liegen. Die schmalen Transportbänder sind schneller und leichter reinigbar. Die Transportriemen können so verstellt werden, dass Produktreste, die seitlich an den Schalenaußenseiten herunterlaufen, überhaupt nicht auf die Transportbänder gelangen. Dies verbessert die Reibung der Schale auf den Transportbändern und lässt somit höhere Bandgeschwindigkeiten und Bandbeschleunigungen zu. Die Prozesssicherheit wird ebenfalls erhöht. Die Verstellbarkeit der Transportbänder quer zur Transportrichtung sorgt für eine optimale Anpassung an unterschiedliche Schalenböden und für eine verbesserte Auflage mit maximaler Haftung.

Bevorzugt sind die Transportbänder formschlüssig antreibbar, beispielsweise mittels Zahnriemenrädern, Kettenrädern oder Antriebsrollen, um unempfindlich vor allem gegen Flüssigkeiten zu sein, die bei kraftschlüssigen Antrieben die Reibung negativ beeinflussen.

Vorzugsweise sind die Transportbänder Zahnriemen. Die gezahnte Seite des Zahnriemens verbessert das Ablaufen oder Verdrängen von Fremdkörpern auf den Zahnriemen ähnlich wie beim Profil eines Autoreifens.

Bevorzugt weisen die Zahnriemen eine beidseitige Verzahnung auf, d.h. auflageseitig und auf der gegenüberliegenden, inneren Seite, um die Anordnung des Antriebs flexibler zu gestalten.

Die Zahnriemen sind in einer vorteilhaften Weise mittels der Verzahnung antreibbar. Der hierbei vorhandene Formschluss erlaubt unterschiedliche Riemenspannungen und ist resistent gegen Verschmutzung und Fremdkörpern.

Eine besondere Zahnform des Zahnriemens weist eine runde Zahnform ohne eine horizontale Auflage auf, bei der Produktreste nicht liegen bleiben.

Bevorzugt weisen die Transportbänder jeweils eine Breite von 40 mm oder weniger, vorzugsweise von 20 mm oder weniger auf, um einen weiten Verstellbereich zur Verfügung zu stellen und um die Ablage für Produktreste zu minimieren.

Um die Übergabe der Schale vom Zuführförderer auf den Sammelförderer zu optimieren, weisen vorzugsweise wenigstens ein Transportband des Zuführförderers und wenigstens ein Transportband des Sammelförderers in Transportrichtung eine gemeinsame bzw. benachbarte Transportstrecke im Bereich des Bandüberganges vom Zuführförderer zum Sammelförderer auf.

Vorzugsweise ist die Verstellung manuell, pneumatisch oder elektromotorisch ausgebildet, um eine schnelle und einfache Verstellung für den Bediener zu ermöglichen bzw. eine mittels einer Steuerung der Schalenverschließmaschine eine automatische Verstellung inklusive der Speicherung der Verstellpositionen in der Steuerung zu ermöglichen.

Bevorzugt weisen die Transportbänder des Zuführförderers und des Sammelförderers jeweils eine Antriebswelle auf, die die jeweiligen Transportbänder antreiben. Dies hat den Vorteil, dass für mehrere Transportbänder eines Förderers nur ein Antriebsmotor vorgesehen ist und dass dies eine einfache und kostengünstige Konstruktion darstellt.

Im Folgenden werden vorteilhafte Ausführungsbeispiele der Erfindung anhand einer Zeichnung näher erläutert. Im Einzelnen zeigen:
- Figur 1:: eine erfindungsgemäße Schalenverschließmaschine,
- Figur 2:: eine schematische Ansicht eines Zuführförderers mit zwei Transportbändern,
- Figur 3:: eine Drauf- und Seitenansicht eines Zuführförderers und eines Sammelförderers nach dem Stand der Technik,
- Figur 4a:: eine Draufsicht auf eine erfindungsgemäße Variante eines Zuführförderers und eines Sammelförderers,
- Figur 4b:: eine Draufsicht auf einer weiteren Variante eines Zuführförderers und eines Sammelförderers

Gleiche Komponenten sind in den Figuren durchgängig mit gleichen Bezugszeichen versehen worden.

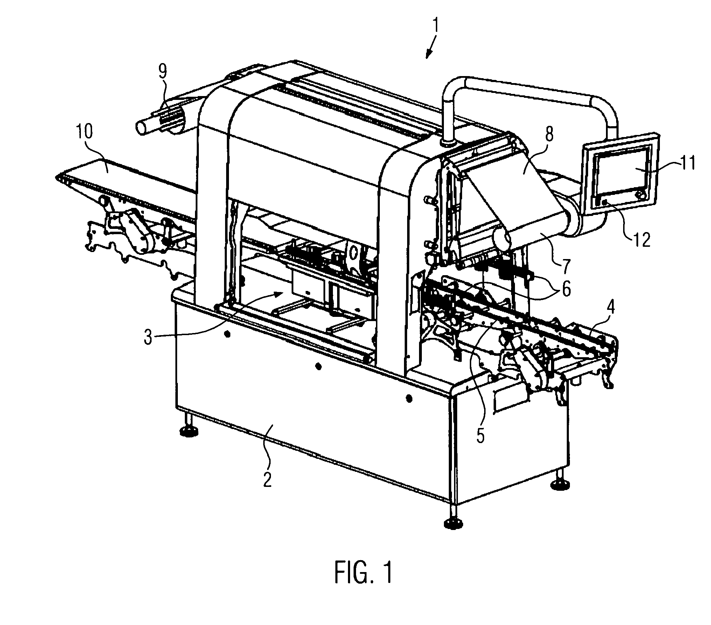

Figur 1 zeigt in perspektivischer Ansicht eine erfindungsgemäße Schalenverschließmaschine 1. Auf einem Gestell 2 befindet sich eine Arbeitsstation 3, im vorliegenden Fall eine Begasungs-, Siegel- und Schneidstation. Ein Zuführförderer 4 und ein nachgeordneter Sammelförderer 5 transportieren gefüllte Schalen (nicht dargestellt) zur Arbeitsstation 3.

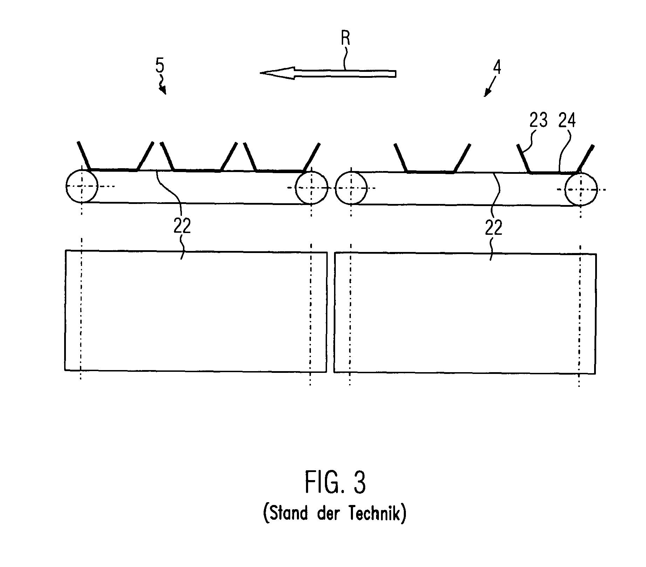

Ein Greifer mit Greifarmen 6 erfasst die Schalen und befördert sie in die Arbeitsstation 3 hinein. Von einem Folienspender 7 wird eine Deckelfolie 8 abgezogen und ebenfalls in die Arbeitsstation 3 geführt. Nach dem Evakuieren und/oder Begasen der Schalen mit einem Austauschgas (MAP) werden die Schalen mit der vom Folienspender 7 abgezogenen Deckelfolie 8 luftdicht versiegelt. Anschließend schneidet ein Schneidwerkzeug die Verpackungsschalen 23 (siehe Figur 3) aus der Deckelfolie 8 aus, vereinzelt also die Verpackungen. Das Restfoliengitter der Deckelfolie 8 wird auf einen Restfolienaufwickler 9 aufgewickelt. Die verschlossenen und vereinzelten Verpackungen werden auf einem Abführband 10 abgelegt und damit aus der Arbeitsstation 3 beziehungsweise aus der Schalenverschließmaschine 1 heraustransportiert. Eine Anzeigevorrichtung 11 und Bedienelemente 12 visualisieren den Betriebsablauf und den Betriebszustand der Schalenverschließmaschine 1 und ermöglichen einem Bediener die Bedienung der Schalenverschließmaschine 1.

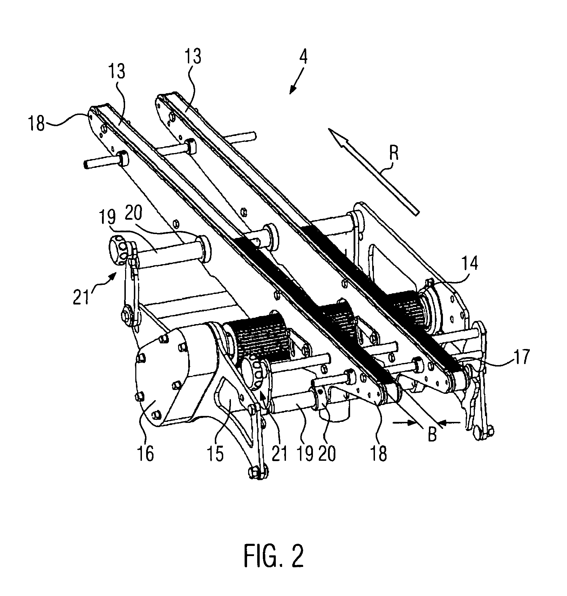

Figur 2 zeigt den Zuführförderer 4 mit zwei parallelen Transportbändern 13 in Form von einseitigen Zahnriemen. Der gemeinsame Antrieb erfolgt über eine Antriebsrolle 14, die über einen Servoantrieb 15 und ein Getriebe 16 angetrieben wird. Die Verzahnung 17 des Transportbandes 13 weist nach oben bzw. außen und dient als Auflage für den Boden der Schale. Mittels Umlenkrollen 18 wird das Transportband 13 so an der Antriebsrolle 14 entlang geführt, dass die auflageseitige Verzahnung 17 mit der Verzahnung der Antriebsrolle 14 formschlüssig zusammenwirkt. Beide Transportbänder 13 sind quer zu einer Transportrichtung R auf den Wellen 19 verstellbar. Mittels lösbarer Klemmringe 20 kann jedes Transportband 13 separat händisch durch den Bediener verstellt werden. Dabei wandert auch die Verzahnung 17 des Transportbands 13 entlang der Antriebsrolle 14, ohne dass die Antriebsrolle 14 verstellt werden muss. Um die Transportbänder 13 entspannen zu können, können diese durch eine Verriegelung 21 für den Verstellvorgang, zum Wechseln oder zum Reinigen der Transportbänder 13, gelöst werden. Jedes Transportband 13 weist eine Breite B auf, die z.B. 30mm betragen kann.

Figur 3 zeigt einen Zuführförderer 4 und einen nachfolgenden Sammelförderer 5 in der Draufsicht (unten) und Seitenansicht (oben) nach dem Stand der Technik mit jeweils einem breiten, durchgehenden Riemenband 22. Die Schalen 23 werden über die gesamte Fläche des Schalenbodens 24 vom Riemenband 22 aufgenommen. Beim Übergang der Schale 23 vom Zuführförderer 4 auf den Sammelförderer 5 weisen beide Riemenbänder 22 die gleiche Geschwindigkeiten auf.

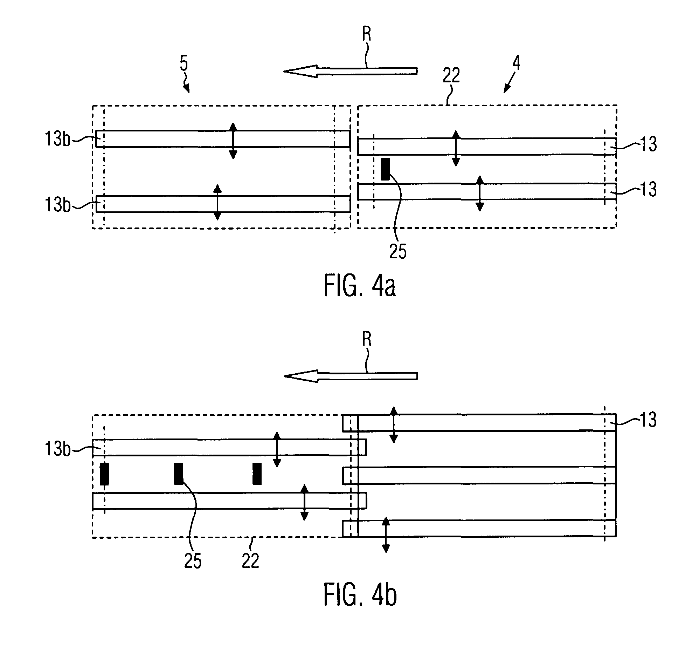

Figur 4a zeigt einen Zuführförderer 4 und einen Sammelförderer 5 einer erfindungsgemäßen Schalenverschließmaschine 1 in der Draufsicht. Zum Vergleich zu Figur 3 sind die Riemenbänder 22 mit gestrichelter Linie eingezeichnet. Das Transportband 13 des Zuführförderers 4 und das Transportband 13b des Sammelförderers 5 sind quer zur Transportrichtung R verstellbar. Zwischen den Transportbändern 13 können ein oder mehrere Stopperelemente 25 vorhanden sein, die von unten über die Transportebene, die durch die Schalenböden definiert ist, nach oben bewegt werden, um die Schalen 23 bei Bedarf auf dem Zuführförderer 4 bei laufendem Transportband 13 anzuhalten.

Eine weitere Ausführungsform ist in Figur 4b gezeigt. Der Zuführförderer 4 weist drei Transportbänder 13 und der Sammelförderer 5 weist zwei Transportbänder 13b auf. Die Transportbänder 13 des Zuführförderers 4 ragen hierbei in den Bereich der Transportbänder 13b des Sammelförderers 5 hinein, so dass bei der Übergabe der Schalen 23 der Schalenboden 24 komplett auf dem Transportband 13 und/oder dem Transportband 13b aufliegt. So entsteht eine gemeinsame bzw. überlappende Transportstrecke. Über die Stopperelemente 25 können die Schalen 23 auf dem Sammelförderer 5 in der Abholposition für die Greiferarme 6 angehalten werden. Dabei können die Geschwindigkeiten der Transportbänder 13 und 13b während der Schalenübergabe auch unterschiedlich sein.

Es ist auch denkbar, das Abführband 10 mit wenigstens zwei Transportbändern (13, 13b), die quer zur Transportrichtung R verstellbar sind, auszuführen. Des Weiteren ist auch eine zweispurige Schalenverschließmaschine 1 mit seitlich verstellbaren Transportbändern (13, 13b) denkbar. Insbesondere bei einer ungeraden Anzahl von Transportbändern könnte mindestens eines davon, beispielsweise das mittlere, fest und quer zur Transportrichtung nicht verstellbar ausgebildet sein.

## Patentansprüche

1. Schalenverschließmaschine (1), umfassend eine Transporteinrichtung, die einen Zuführförderer (4) und/oder einen ggf. dem Zuführförderer (4) in Transportrichtung (R) nachgeordneten Sammelförderer (5) aufweist, um Schalen (23) zu einer Arbeitsstation (3) der Schalenverschließmaschine (1) zu transportieren, **dadurch gekennzeichnet, dass** der Zuführförderer (4) und/oder der Sammelförderer (5) jeweils wenigstens zwei Transportbänder (13, 13b) aufweisen, von denen wenigstens zwei Transportbänder (13, 13b) quer zur Transportrichtung (R) verstellbar sind.

2. Schalenverschließmaschine nach Anspruch 1, **dadurch gekennzeichnet, dass** alle Transportbänder (13, 13b) quer zur Transportrichtung (R) verstellbar sind.

3. Schalenverschließmaschine nach einem der vorangehenden Ansprüche, **dadurch gekennzeichnet, dass** die Transportbänder (13, 13b) formschlüssig antreibbar sind.

4. Schalenverschließmaschine nach einem der vorangehenden Ansprüche, **dadurch gekennzeichnet, dass** die Transportbänder (13, 13b) Zahnriemen zum Transportieren der Schalen (23) sind.

5. Schalenverschließmaschine nach Anspruch 4, **dadurch gekennzeichnet, dass** der Zahnriemen (13, 13b) beidseitig eine Verzahnung (17) aufweist.

6. Schalenverschließmaschine nach Anspruch 4 oder 5, **dadurch gekennzeichnet, dass** die Zahnriemen (13, 13b) über die Verzahnung (17) antreibbar sind.

7. Schalenverschließmaschine nach einem der Ansprüche 4 bis 6, **dadurch gekennzeichnet, dass** die Zahnriemen (13, 13b) eine runde Zahnform aufweisen.

8. Schalenverschließmaschine nach einem der vorangehenden Ansprüche, **dadurch gekennzeichnet, dass** die Transportbänder (13, 13b) jeweils eine Breite (B) von 40 mm oder weniger, vorzugsweise von weniger als 20 mm, aufweisen.

9. Schalenverschließmaschine nach einem der vorangehenden Ansprüche, **dadurch gekennzeichnet, dass** wenigstens ein Transportband (13) des Zuführförderers (4) und wenigstens ein Transportband (13b) des Sammelförderers (5) in Transportrichtung (R) eine gemeinsame bzw. benachbarte Transportstrecke im Bereich des Bandüberganges vom Zuführförderer (4) zum Sammelförderer (5) aufweisen.

10. Schalenverschließmaschine nach einem der vorangehenden Ansprüche, **dadurch gekennzeichnet, dass** die Verstellung der Transportbänder (13, 13b) manuell, pneumatisch oder elektromotorisch ausgebildet ist.

11. Schalenverschließmaschine nach einem der vorangehenden Ansprüche, **dadurch gekennzeichnet, dass** die Transportbänder (13, 13b) des Zuführförderers (4) und des Sammelförderers (5) jeweils eine gemeinsame Antriebswelle (14) aufweisen, die die jeweiligen Transportbänder (13, 13b) antreiben.
